# EUROPÄISCHE PATENTSCHRIFT

(11) **EP 3 345 518 B1**
(45) Veröffentlichungstag und Bekanntmachung des Hinweises auf die Patenterteilung: **20.02.2019**
(21) Anmeldenummer: 17150697.5
(22) Anmeldetag: 09.01.2017
(51) Int. Cl.: A47J 31/60

(54) **REINIGUNGSSYSTEM**
CLEANING SYSTEM
SYSTÈME DE NETTOYAGE

(43) Veröffentlichungstag der Anmeldung: 11.07.2018
(73) Patentinhaber: CUP&CINO Kaffeesystem-Vertrieb GmbH & Co. KG, 33161 Hövelhof (DE)
(72) Erfinder: Epping, Frank Josef Paul, 33161 Hövelhof (DE)
(74) Vertreter: BOVARD AG

(56) Entgegenhaltungen:
- EP-A1- 2 695 555
- DE-A1-102014 215 689

## Beschreibung

### Technisches Gebiet der Erfindung

Die vorliegende Erfindung betrifft ein Verfahren und eine Vorrichtung zur Reinigung eines Milchsystems, welches beispielsweise einem Getränkebereiter zugeordnet ist.

### Stand der Technik

Für die Zubereitung von Getränken, wie beispielsweise Kaffee und Schokolade, stehen eine Vielzahl von Vorrichtungen zur Verfügung, welche von einem manuellen System bis zu einem Vollautomaten reichen. Die mit einem Getränkebereiter herstellbaren Spezialitäten umfassen milchhaltige Getränke wie Cappuccino, Latte Macchiato oder Café Latte, welche zur Zubereitung Milch und/oder Milchschaum benötigen. Die Milch ist im Allgemeinen in einer entsprechenden Einrichtung bevorratet, beispielsweise einem Milchbehälter, welcher in einem Getränkebereiter integriert oder einem solchen beigeordnet ist und mit diesem über ein Beschickungssystem verbindbar ist. Ausgehend von einem Milchbehälter, wird die Milch über Zuführeinrichtungen und eventuellen Verarbeitungseinrichtungen, beispielsweise erhitzt und aufgeschäumt und, zusammen mit einem Kaffee- oder Schokoladengetränk, an einer Ausgabe ausgegeben.

Alle Elemente, welche in Kontakt mit Milch in einem derartigen System stehen, müssen regelmässig gereinigt werden, um die geforderten hygienischen Standards zu erfüllen. Hierbei ist ein möglichst automatisierter Reinigungsvorgang wünschenswert, welcher schnell, sicher und unabhängig vom Bedienpersonal zu dem gewünschten reproduzierbaren Reinigungsergebnis führt.

Aus DE 10 2014 215 689 ist eine Vorrichtung und ein Verfahren zum Reinigen einer Zuführeinrichtung für Milch in einer Getränkeausgabevorrichtung bekannt, wobei in der Zuführeinrichtung neben einem Milchbehälter ein mit Reinigungsmittel gefüllter Reinigungsmittelbehälter und eine mit ihm verbundene Entnahmepumpe angeordnet sind. Für einen Reinigungsvorgang wird der Milchbehälter gegen einen Reinigungsmischbehälter ausgetauscht, in welchen das Reinigungsmittel überführt wird. In dem Mischbehälter kann zusätzlich oder alternativ Frischwasser zugeführt werden, um eine Reinigungslösung bestimmter Konzentration oder eine Spüllösung für einen Reinigungsvorgang bereitzustellen. Mittels der Zuführeinrichtung der Getränkeausgabevorrichtung wird die Reinigungslösung entnommen und verunreinigte Systemelemente gespült.

Nachteilig bei diesem Verfahren ist, dass das Reinigen mit Reinigungsmittel und das Spülen mit Frischwasser über den gleichen Mischbehälter erfolgt. Dies benötigt Zeit, da beispielsweise zunächst der Reinigungsmischbehälter komplett geleert werden muss, bevor ein Wechsel der Spülflüssigkeit möglich wird. Darüber hinaus wird eine grosse Menge an Frischwasser verbraucht. Ferner sieht das System keine Überprüfung vor, ob tatsächlich eine Reinigung stattgefunden hat. Eine unbeabsichtigte Kontamination der Milch durch Reinigungsmittel kann eintreten, so dass ein kontaminiertes Getränk zubereitet werden könnte.

### Zusammenfassung der Erfindung

Der vorliegenden Erfindung liegt die Aufgabe zugrunde, eine Reinigung eines Milchsystems, welches einem Getränkebereiter zugeordnet ist, zu vereinfachen, die erforderliche Reinigungszeit zu verkürzen, für einen Benutzer nachvollziehbar zu gestalten, eine Fehleranfälligkeit zu reduzieren und eine Überwachung zu ermöglichen.

Gelöst werden die Aufgaben mit einem erfindungsgemässen Verfahren zum Reinigen eines Milchsystems, insbesondere zugeordnet einem Getränkebereiter, umfassend die folgenden Schritte, dass zunächst ein Milchbehälter des Milchsystems durch ein Reinigungsmodul ausgetauscht wird, welches mindestens zwei Zonen umfasst, wobei in eine erste Zone und in eine zweite Zone Reinigungsfluid und in eine Kammer ein Reinigungsmittel gefüllt ist.
Erste und zweite Zone stehen in Abhängigkeit vom Füllstand des eingefüllten Reinigungsfluid zumindest teilweise miteinander in fluidleitender Verbindung. Es folgt ein Verbinden der ersten Zone und der zweiten Zone mit Andockstationen des Milchsystems zum Ansaugen von Reinigungsfluid, Fördern des Reinigungsfluid durch das Milchsystem und Rückführen des Reinigungsfluid in das Reinigungsmodul. Nach dem Verbinden wird das Milchsystem mit Reinigungsfluid gespült, wobei Reinigungsfluid aus der ersten Zone und/oder aus der zweiten Zone des Reinigungsmoduls durch das Milchsystem gefördert wird. Es folgt eine Kreislaufspülung des Milchsystems, wobei Reinigungsfluid aus der zweiten Zone entnommen, mittels einer Heizeinrichtung erwärmt und in die Kammer rückgeführt wird, wobei es über die fluidleitende Verbindung in die zweiten Zone gelangt. Die Kreislaufspülung wird nach einem definierten Reinigungszyklus beendet. Anschliessend folgt eine Endspülung des Milchsystems mit Reinigungsfluid, welches aus der ersten Zone entnommen wird.

Erfindungsgemäss vorgesehen ist, dass das in die erste und zweite Zone gefüllte Reinigungsfluid Frischwasser ist.

Durch Ausleiten des Reinigungsfluid, beispielsweise in eine dritte Zone oder eine Tropfschale, welche bereits als ein Element des Getränkebereiters vorhanden ist, sinkt der Füllstand in der zweiten Zone. Ist ein bestimmter niedriger Füllstand erreicht, schliesst eine Ventileinrichtung der zweiten Zone und Reinigungsfluid, beispielsweise kaltes Frischwasser wird aus der ersten Zone für die Endspülung entnommen.

Dieses Verfahren vereinigt mehrere Vorteile in sich. Insbesondere die erste Spülung mit Frischwasser kann rasch durchgeführt werden, ohne dass Heizleistung aufzubringen ist. Vorteilhaft wird bei dem Verfahren eine in dem Getränkebehälter integrierte Heizeinrichtung insbesondere für die Kreislaufspülung genutzt, bevorzugt ein Dickschichtheizelement. Dieses Dickschichtheizelement mit seinem vorteilhaften Temperaturverhalten erlaubt ein kombiniertes Kalt-Heiss-Reinigungsverfahren. Vorteilhaft erweist sich auch die schrittweise zunehmende Konzentration an Reinigungsmittel in dem Reinigungsfluid, so dass eine optimale Reinigung unter gleichzeitiger Vermeidung einer Milchsteinbildung und einer effektiven Beseitigung von Milchfett erfolgen kann. Ferner kann mit dem Verfahren und der noch zu beschreibenden Vorrichtung ein Andocksystem der Milchbehälter auch von aussen gereinigt werden, an welchen ansonsten Milchreste verbleiben würden. Die Kreislaufspülung ist ebenfalls Ressourcen sparend.

Als vorteilhaft erweist sich, dass das Umschalten zwischen einzelnen Spülschritten ohne Steuerung erfolgen kann. Das Umschalten erfolgt in Abhängigkeit des Füllstandes, beispielsweise dann wenn der Füllstand des in der ersten und zweiten Zone eingefüllten Reinigungsfluid derart abgesunken ist, dass zwischen der ersten und der zweiten Zone keine fluidleitende Verbindung besteht. Ebenfalls erfolgt ein Umschalten auf Endspülung, wenn der Füllstand ein Schliessen der Ventileinrichtung in der zweiten Zone erzeugt, welche bevorzugt als Schwimmerventil ausgebildet ist.

Vorgesehen ist, dass der vorhandene Milchbehälter gegen ein erfindungsgemässes Reinigungsmodul ausgetauscht wird, wobei dieses in ein entsprechend ausgebildetes Gehäuse eingeschoben wird, so dass in seiner Endposition das Reinigungsmodul mit bereitgestellten Andockstationen und weiteren Anschlussmitteln fluidleitend verbunden ist. Die Anwesenheit und exakte Position des Reinigungsmoduls kann von einem mechanischen, RFID, HALL, REED oder ähnlichem Sensor detektiert und einer vorgesehenen Steuerung weitergeleitet werden, um das Reinigungsverfahren zu starten. Diese automatische Detektion verhindert eine Fehlfunktion und ist somit besonders bedienungsfreundlich.

Ferner kann auch eine Überwachung vorgesehen sein, um zu verifizieren, dass die Tropfschale, in welche das Reinigungsfluid bei der Endreinigung eingeleitet wird, entfernt und gereinigt wird, bevor das System zur Getränkebereitung wieder freigegeben wird.

Mit Beginn des erfindungsgemässen Reinigungsverfahrens erfolgt eine Zuführung von Reinigungsfluid, insbesondere Frischwasser, aus mindestens einer der ersten und/oder zweiten Zone des Reinigungsmoduls. Hierbei wird in einem ersten Spülschritt zunächst zumindest ein Teil des Reinigungsfluid aus der ersten Zone und/oder zweiten Zone des Reinigungsmoduls angesaugt. Bevorzugt ist vorgesehen, dass erste und zweite Zone zumindest teilweise fluidleitend verbunden sind. Sinkt der Füllstand durch Entnahme von Frischwasser bis zu einem bestimmten Level ab, wird die fluidleitende Verbindung zwischen erster und zweiter Zone unterbrochen, der erste Spülschritt endet.

Alternativ können Ventileinrichtungen in den fluidleitenden Verbindungen vorgesehen sein, welche mittels einer Steuereinheit geöffnet und/oder geschlossen werden, um die Entnahme des Reinigungsfluid zu steuern.

Diese Phase des Reinigungsverfahrens dient dem Durchspülen der zu reinigenden Komponenten, wobei vorteilhaft durch kaltes Frischwasser eine Milchsteinbildung vermieden wird, welche insbesondere bei einer Spülung mit heissem Wasser zu beobachten ist. Während dieser ersten Phase, auch als Vorspülung bezeichnet, wird insbesondere ein Teil des bevorrateten Frischwassers entnommen und ausgeleitet, wobei es alternativ in die Tropfschale oder eine vorhandene dritte Zone ausgeleitet werden kann.

In einem folgenden Schritt wird das der zweiten Zone entnommene Reinigungsfluid im Kreislauf geführt, d.h. es wird aus der zweiten Zone angesaugt und in die Kammer mit dem Reinigungsmittel rückgeführt, von der es wieder in die zweite Zone gelangt. Gelangt das rückführte Reinigungsfluid in die Kammer, nimmt es dort das bevorratete Reinigungsmittel auf. Beispielsweise ist in der Kammer ein Reinigungsmittelkonzentrat bevorratet, insbesondere eine Reinigungstablette, welche sukzessive Reinigungskomponente an das rückgeführte Reinigungsfluid abgibt. Dabei ändert sich die Konzentration der Reinigungskomponente in dem im Kreislauf geführten Reinigungsfluid, welches auch folgend als Reinigungs- oder Spüllösung bezeichnet wird. Von der Kammer gelangt die Reinigungs- oder Spüllösung mit einem veränderlichen Anteil an Reinigungskomponente in die zweite Zone und bildet dort ein Reservoir an Reinigungsfluid. Durch das Leiten des Reinigungsfluid in die Kammer und eine damit einhergehende dynamische Strömungsbewegung wird die Reinigungskomponente besonders vorteilhaft mit der Reinigungs- bzw. Spüllösung vermischt und insbesondere kann sich eine als Feststoff vorgesehene Reinigungskomponente weitgehend ohne Reste auflösen.

Die im Kreislauf geführte Reinigungs- oder Spüllösung kann bevorzugt in dieser Phase des Reinigungsverfahrens mittels eines Heizelements aufgeheizt werden, bevorzugt mit einem auf der Dickschichttechnologie basierendem Heizelement. Insbesondere kann die im Kreislauf geführte Reinigungs- oder Spüllösung auf eine definierte Temperatur erhitzt werden, welche hinsichtlich eines zu erzielenden Hygieneeffekts mindestens 70°C bis 80°C beträgt. Mit der Kreislaufführung der Reinigungs- oder Spüllösung kann dies besonders energiesparend erfolgen. Ferner ergeben sich vorteilhaft kurze Reinigungszeiten, in denen das zu reinigende Milchsystem nicht in seinem normalen Betriebsmodus genutzt werden kann.

In einem weiteren Schritt des Reinigungsverfahrens wird der Kreislaufmodus beendet, wobei die Reinigungs- und Spüllösung in die vorhandene dritte Zone des Reinigungsmoduls oder alternativ in die vorhandene Tropfschale des Getränkebereiters geleitet wird. Die dritte Zone bzw. die Tropfschale stellen demnach ein Sammelbehälter für die aus dem System auszuleitende und zu verwerfende Reinigungs- bzw. Spüllösung bereit. Nach einer gewissen Reinigungszeit, wobei das Reinigungsfluid erwärmt und mit Reinigungsmittel versetzt im Kreislauf geführt wird, wird es in die dritte Zone bzw. in die Tropfschale geleitet, wodurch der Fluidpegel in der zweiten Zone absinkt. Ab einem bestimmten tiefen Fluidpegel verschliesst eine vorhandene Ventileinrichtung, bevorzugt ausgebildet als Schwimmerventil, die Reinigungsfluidzufuhr aus der zweiten Zone, wobei automatisch Frischwasser aus der ersten Zone angesaugt wird, welches in die dritte Zone oder alternativ die Tropfschale ausgeleitet wird. Das vorhandene Heizelement wird abgeschaltet, so dass die nun tiefere Temperatur des Frischwassers eine Endspülung anzeigt.

Zur Kontrolle eines erzielten Reinigungseffekts des Reinigungsverfahrens ist vorgesehen, den Leitwert der Reinigungs- bzw. Spüllösung zu bestimmen. Hierfür ist ein Leitwertsensor, vorteilhaft im Ansaugbereich der Pumpe, innerhalb des Kreislaufs der Reinigungs- bzw. Spüllösung vorgesehen, welcher die tatsächliche elektrolytische Leitfähigkeit des geförderten Fluid misst und damit Auskunft gibt über die Natur des Fluid bzw. dessen Schmutzbelastung. Ferner kann dadurch verifiziert werden, welches Fluid sich in dem Leitungssystem befindet. Der Leitwertsensor kann Signale an eine Steuereinheit übermitteln, um anzuzeigen ob ein Reinigungsverfahren erfolgreich verlaufen ist. Falls die Reinigung unvollständig ist, insbesondere die geforderten Hygienestandards nicht erzielt wurden, kann das gesamte System gesperrt werden. Dies bietet eine verlässliche Kontrolle für das Bedienpersonal.

Das erfindungsgemässe Verfahren umfasst als Mittel ein Reinigungsmodul für ein Milchsystem mit einer Abgabeeinrichtung, welches einem Getränkebereiter, insbesondere eine Kaffeemaschine, zugeordnet ist. Hierunter ist aber auch ein eigenständiges Reinigungsmodul zu verstehen, welches als "stand-alone"-System ausgebildet ist.

Das erfindungsgemässe Reinigungsmodul für ein Milchsystem mit einer Abgabeeinrichtung, beispielsweise einem Auslasskopf, umfasst einen Reinigungsbehälter zur Aufnahme von Reinigungsfluid, wobei der Reinigungsbehälter mindestens zwei Zonen aufweist. Ferner weist das Reinigungsmodul Anschlussmittel auf, so dass die mindestens zwei Zonen derart fluidleitend mit dem Milchsystem verbindbar sind, dass Reinigungsfluid entnehmbar, durch das Milchsystem förderbar und in das Reinigungsmodul zumindest zum Teil rückführbar ist. Das kompakte Reinigungsmodul ist leicht handhabbar, so dass auch seine Reinigung problemlos erfolgen kann.

Das Milchsystem bzw. der Getränkebereiter umfasst zumindest teilweise ein Leitungssystem, mindestens eine Fördereinrichtung und eine Abgabeeinrichtung, Vorratsbehälter und evtl. ein Luftanreicherungselement, sowie mindestens ein Heizelement und eine Steuereinheit.

Mit dem erfindungsgemässen Reinigungsmodul kann ein Reinigen eines mit einem Getränkebereiter in Verbindung stehenden Milchsystems erfolgen, insbesondere derjenigen Systemkomponenten, welche mit Milch in direktem Kontakt stehen, seien es Zuführeinrichtungen, Verarbeitungseinrichtungen oder Abgabeeinrichtungen zum Ansaugen, Fördern, Aufbereiten und Abgeben der mindestens einem Milchbehälter entnommenen Milch. Insbesondere ist auch vorgesehen, dass Schnittstellen, d.h. beispielsweise Andockstationen und Abgabeeinrichtungen sowohl von innen als auch von aussen gereinigt werden können. Besonders vorteilhaft ist dabei, dass der Auslasskopf eines Getränkebereiters nicht mehr demontiert werden muss, um gereinigt zu werden, da erfindungsgemäss dieser sowohl von innen als auch von aussen gereinigt werden kann.

Das Reinigungsmodul ist in einfacher Weise mit dem Milchsystem eines Getränkebereiters verbindbar, insbesondere kann ein in einem Gehäuse angeordneter Milchbehälter gegen das Reinigungsmodul ausgetauscht werden. Vorhandene Anschluss- und Ansaugmittel zum Ansaugen von Milch aus dem Milchbehälter und Fördern von Milch in dem Leitungssystem sind mit dem Reinigungsmodul derart verbindbar, dass nun ein bereitgestelltes Reinigungsfluid aus dem Reinigungsmodul von den Ansaugmitteln angesaugt und durch diejenigen Systemkomponenten des Milchsystems gefördert wird, welche mit Milch in Kontakt stehen und zumindest teilweise rückgeführt wird.

Im Austausch mit dem Milchbehälter kann das Reinigungsmodul beispielsweise in das Gehäuse eingesetzt und mit den Anschlussmitteln des Milchsystems fluidleitend verbunden werden. Beispielsweise können die im Rahmen des Milchsystems vorgesehenen Andockstationen und eventuell vorhandene weitere Anschlussmittel z.B. für eine Rückführung verwendet werden, wodurch ein Anschluss ohne Fehler erleichtert ist.

Das Reinigungsmodul weist mehrere Zonen auf, bevorzugt eine erste und eine zweite Zone, welche zumindest teilweise miteinander in fluidleitender Verbindung stehen. In einer Ausführungsform kann das Reinigungsmodul drei Zonen umfassen, wobei bevorzugt mindestens eine der drei Zonen als ein separater und abtrennbarer Behälter ausgebildet ist. Ferner kann das Reinigungsmodul ein abtrennbares Element umfassen, an welchem Andockstationen und weitere Anschlussmittel vorgesehen sind. Diese Mehrteiligkeit erleichtert eine Reinigung der einzelnen Teile des Reinigungsmoduls, ebenso wie beispielsweise ein Ersatz einzelner Elemente.

Das Reinigungsmodul bevorratet Reinigungsfluid in mindestens einer ersten und in einer zweiten Zone, wobei in der zweiten Zone noch eine Kammer vorgesehen ist, in welcher ein Reinigungsmittel einfüllbar ist, und welche mit der zweiten Zone fluidleitend verbunden ist. In die Kammer der zweiten Zone kann in einer Phase des Reinigungsverfahrens Reinigungsfluid rückgeführt werden, wobei dieses in die zweite Zone überströmt und so im Kreislauf geführt werden kann. Das Reinigungsfluid wird nach Beendigung der Kreislaufphase gesammelt, beispielsweise in der vorhandenen dritten Zone, welche einen Sammelbehälter für Abwasser bereitstellt oder alternativ in der Tropfschale. Vorzugsweise ist ein derartiger Sammelbehälter von dem Reinigungsmodul abtrennbar ausgebildet, so dass das darin aufgefangene Reinigungsfluid verworfen werden kann.

In die erste Zone und in die zweite Zone des Reinigungsmoduls kann als Reinigungsfluid Frischwasser und in die Kammer Reinigungsmittel zu Beginn eines Reinigungsverfahrens eingefüllt werden. Erste und zweite Zone sind zumindest teilweise miteinander in Abhängigkeit vom Füllstand fluidleitend verbunden, bzw. soweit voneinander getrennt, dass in der ersten Zone reines Frischwasser vorhanden ist.

Das Reinigungsmodul ist vorzugsweise so ausgebildet, dass das Reinigungsfluid an der Abgabeeinrichtung des Milchsystems über einen mit dieser verbindbaren Reinigungskopf und einer Rückführleitung in mindestens die Kammer, in die dritte Zone des Reinigungsmoduls oder in die Tropfschale rückführbar ist. Der Reinigungskopf ist vorzugsweise derart gestaltet, dass eine Spülung der Abgabeeinrichtung von Innen und Aussen durch das Reinigungsfluid möglich ist. Hierbei wird ein Reinigungskopf an der Abgabeeinrichtung angeordnet, beispielsweise mittels Magneten an der Auslassseite der Abgabeeinrichtung mit dieser verbunden. Der angeordnete Reinigungskopf ist derart ausgebildet, dass die Innen- und Aussenseite der Abgabeeinrichtung vorzugsweise durch ein Reinigungsfluid mit turbulenter Strömung gespült wird. Durch die Ausgestaltung des Reinigungskopfs ist eine intensive Reinigung möglich, wobei das Reinigungsfluid vollständig aus der Abgabevorrichtung ausläuft, beispielsweise durch eine Auslassöffnung, vorgesehen am tiefsten Punkt der Abgabevorrichtung.

Das Reinigungsmodul umfasst demnach mindestens zwei Zonen, beispielsweise ausgebildet als miteinander verbindbare Behälter, welche unabhängig voneinander mit unterschiedlichen Medien gefüllt sein können. Die Medien umfassen Fluide, beispielsweise Frischwasser oder Reinigungsfluid, und/oder Feststoffe, beispielsweise eine Reinigungstablette (Reinigungstab). Erste und zweite Zone stehen in Abhängigkeit vom Füllstand zumindest teilweise in fluidleitender Verbindung, beispielsweise sind erste und zweite Zonen teilweise durch eine Trennwand voneinander getrennt. Hierbei stehen die erste und die zweite Zone des Reinigungsmoduls in fluidleitender Verbindung mit einer Saugseite der Ansaugmittel, beispielsweise mit der Fördereinrichtung des Milchsystems. Insbesondere umfassen die Ansaugmittel mindestens zwei fluidleitende Verbindungen für die erste und die zweite Zone. Die Kammer und eventuell die dritte Zone stehen in fluidleitender Verbindung zumindest indirekt mit der Auslassseite der Ansaugmittel.

Das Reinigungsmodul umfasst in den fluidleitenden Verbindungen der ersten und der zweiten Zone Ventileinrichtungen. Bevorzugt sind Schwimmerventile, welche in Abhängigkeit vom Füllstand schliessen.

Erste und zweite Zonen können manuell mit Reinigungsfluid gefüllt werden, vorzugsweise kaltes Frischwasser. Eine manuelle Befüllung ist gegenüber einer automatisch innerhalb des Milchsystems bzw. einem zugeordneten Getränkebereiters erfolgende Befüllung vorteilhaft, da zumindest kein Frischwasseranschluss und weitere Komponenten vorgesehen sein müssen. Somit besteht eine gewisse Unabhängigkeit bezüglich der Peripherie. Ferner ist eine manuelle Befüllung in kürzerer Zeit durchführbar als eine Befüllung mittels einer integrierten Pumpe.

In der Kammer, ausgebildet in der zweiten Zone des Reinigungsmoduls, ist ein Reinigungsmittel bevorratet, beispielsweise in Form eines Konzentrats bzw. in Form einer Reinigungstablette. Die Befüllung der Kammer mit Reinigungsmittel kann ebenfalls manuell erfolgen, welches weniger fehleranfällig und darüber hinaus überprüfbar ist. Diese Kammer steht in fluidleitender Verbindung mit der zweiten Zone des Reinigungsmoduls. Bevorzugt wird das Reinigungsfluid von der Abgabeeinrichtung des Milchsystems über den dort angeschlossenen Reinigungskopf und die umfasste Rückführleitung in die Kammer der zweiten Zone rückgeführt, wobei sie dort evtl. mit Reinigungsmittel angereichert wird. Insbesondere gelangt das in die Kammer rückgeführte Reinigungsfluid über eine Leitung oder einen Überlauf in die zweite Zone, um während einer Phase des Reinigungsverfahrens im Kreislauf geführt zu werden. Diese Kreislaufführung erweist sich als besonders Wassersparend.

Ferner ist in einer Ausführungsform eine Rückführleitung, ein Ventilaufweisend, mit der dritten Zone oder alternativ mit der Tropfschale verbindbar, so dass rückgeführtes, verbrauchtes Reinigungsfluid gesammelt werden kann, welches nicht mehr in den Reinigungszyklus eingespeist wird und auf einfache Weise ausschleusbar ist.

Das erfindungsgemässe Reinigungsmodul wird genutzt, um ein Milchsystem zu reinigen, welches in einem Getränkebereiter integriert ist oder diesem beigeordnet ist. Ein Getränkebereiter ist insbesondere eine Kaffeemaschine, umfassend mindestens eine Fördereinrichtung mit einer Ansaugleitung auf der Saugseite und einer Auslassleitung an der Auslassseite der Fördereinrichtung. Demnach ist Flüssigkeit über die Ansaugleitung ansaugbar und über die Fördereinrichtung und die Auslassleitung zu einer Abgabeeinrichtung förderbar, insbesondere ausgebildet als Auslasskopf.

Darüber hinaus kann die Vorrichtung zur Reinigung noch Ventile, Pumpen, Heizelemente und/oder einen Leitwertsensor umfassen.

### Kurzbeschreibung der Zeichnungen

Weitere bevorzugte Merkmale und bevorzugte Ausführungsformen werden im Folgenden anhand von Ausführungsbeispielen und den Figuren erläutert. Dabei zeigen:
Fig. 1 eine schematische Darstellung eines erfindungsgemässen Reinigungsmoduls;
Fig. 2 eine schematische Darstellung eines erfindungsgemässen Reinigungsmoduls mit den fluidleitenden Verbindungen; und

### Detaillierte Beschreibung der Ausführungsformen der Erfindung

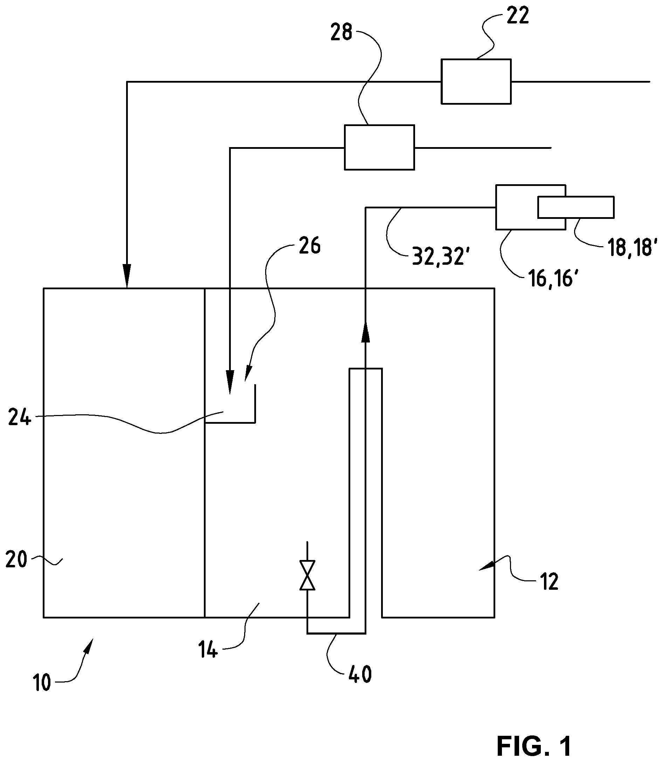

In Figur 1 ist ein Ausführungsbeispiel eines erfindungsgemässen Reinigungsmoduls 10 schematisch dargestellt. Das Reinigungsmodul 10 ist in dem Ausführungsbeispiel unterteilt in Zonen, welche zumindest teilweise durch miteinander verbindbare Behälter gebildet werden. Umfasst ist eine erste Zone 12 und eine zweite Zone 14, welche vor Beginn eines Reinigungsverfahrens manuell mit Reinigungsfluid, bevorzugt mit Frischwasser befüllt werden. Durch das Frischwasser steht eine Spüllösung für eine erste Reinigungsphase und für eine Endspülung bereit. Das in der zweiten Zone14 bevorratete Frischwasser wird insbesondere für eine Kreislaufführung verwendet.

Erste und zweite Zonen 12, 14 sind mit einer Saugseite mindestens einer Fördereinrichtung eines Milchsystems bzw. eines Getränkebereiters fluidleitend verbindbar (nicht dargestellt). Insbesondere sind Anschlussmittel 16, 16' vorgesehen, welche mit Andockstationen 18, 18' des Milchsystem bzw. des Getränkebereiter verbindbar sind. Die Anschlussmittel 16, 16' können derart ausgebildet sein, dass eine Spülung der Andockstationen 18, 18' des Milchbehälters auch von aussen gespült werden können. Zu den Anschlussmitteln 16, 16' erstrecken sich Anschlussschläuche 32, 32' zu den einzelnen Zonen.

Ferner ist in der dargestellten Ausführungsform eine dritte Zone 20 in dem Reinigungsmodul 10 vorgesehen, welche mittels eines Anschlussstücks 22 mit einem Rücklauf (nicht dargestellt) verbindbar ist. In der zweiten Zone 14 ist eine Kammer 24 ausgebildet, welche fluidleitend mit der zweiten Zone 14 verbindbar ist. Insbesondere ist ein Überlauf 26 vorgesehen, so dass Reinigungsfluid aus der Kammer 24 in die zweite Zone 14 gelangt. Die Kammer 24 steht in fluidleitender Verbindung mit einem zweiten Anschlussstück 28, mittels welches die Kammer 24 zumindest indirekt mit einer Auslassseite der mindestens einen Fördereinrichtung verbindbar ist.

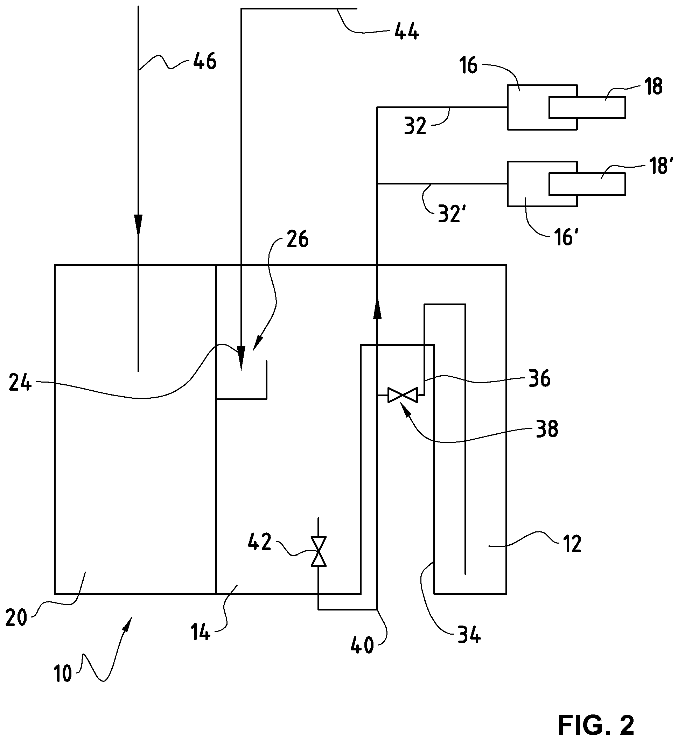

In Figur 2 werden die fluidleitenden Verbindungen zu den einzelnen Zonen des Reinigungsmoduls 10 dargestellt. Ausgehend von den Andockstationen 18, 18', erstrecken sich Anschlussschläuche 32, 32', welche eine fluidleitende Verbindung zu der ersten Zone 12 und der zweiten Zone 14 bereitstellen, d.h. diese mit der mindestens einen Fördereinrichtung (nicht dargestellt) verbinden. Ferner ist gezeigt, dass aus der ersten Zone 12 bevorratetes Reinigungsfluid über einen Ansaugstutzen 34 und eine Ventileinrichtung 36 mit den Anschlussschläuchen 32, 32' an einem Verbindungsstück 38 verbunden ist. An dem Verbindungsstück 38 mündet ebenfalls eine fluidleitende Verbindung 40, ausgehend von der zweiten Zone 14 und eine zweite Ventileinrichtung 42 umfassend. Die zweite Ventileinrichtung 42 ist insbesondere als Schwimmerventil ausgebildet, wobei die fluidleitende Verbindung 40 unterbrochen wird, wenn ein Füllstand in der zweiten Zone 14 unter ein bestimmtes Level abgesunken ist.

Ferner kann Fig. 2 entnommen werden, dass in die Kammer 24, ausgebildet in der zweiten Zone 14, eine Rücklaufleitung 44 mündet, über welche Reinigungsfluid rückgeführt und weiter über Überlauf 26 in die zweite Zone 14 gelangt, um von dort im Kreislauf geführt zu werden. In der Kammer 24 ist vorzugsweise ein Reinigungsmittelkonzentrat bevorratet, welches durch das Durchspülen der Kammer 24 sukzessive in das Reinigungsfluid übergeht.

In Fig. 2 ist auch die dritte Zone 20 zu erkennen, welche ebenfalls mit einer zweiten Rückführleitung 46 fluidleitend verbindbar ist. Das über die zweite Rückführleitung 46 in die dritte Zone 20 überführte Reinigungsfluid wird in der dritten Zone 20 gesammelt. Dieses gesammelte Reinigungsfluid kann bei Entnahme des Reinigungsmoduls 10 manuell entleert werden. Vorzugsweise ist die dritte Zone 20 als abtrennbarer Sammelbehälter ausgebildet.

## Patentansprüche

1. Verfahren zur Reinigung eines Milchsystems mit Abgabeeinrichtung, welches einem Getränkebereiter zugeordnet ist, umfassend eine Steuereinheit und ein Reinigungsmodul (10), mit den Schritten:
a) Austausch eines Milchbehälters des Milchsystems durch das Reinigungsmodul (10), umfassend mindestens zwei Zonen (12, 14) wobei in eine erste Zone (12) und in eine zweite Zone (14) Reinigungsfluid und in eine Kammer (24) ein Reinigungsmittel gefüllt ist;
b) Verbinden der ersten Zone (12) und der zweiten Zone (14) mit Andockstationen (18, 18') des Milchsystems zum Ansaugen von Reinigungsfluid, Fördern des Reinigungsfluid durch das Milchsystem und zumindest teilweise Rückführen des Reinigungsfluid in das Reinigungsmodul (10);
c) Spülung des Milchsystems mit Reinigungsfluid, wobei Reinigungsfluid aus der ersten Zone (12) und/oder aus der zweiten Zone (14) des Reinigungsmoduls (10) durch das Milchsystem gefördert und ausgeleitet wird;
d) Kreislaufspülung des Milchsystems, wobei Reinigungsfluid aus der zweiten Zone (14) entnommen, mittels einer Heizeinrichtung erwärmt und in die Kammer (24) rückgeführt wird, wobei es über eine fluidleitende Verbindung (26) in die zweiten Zone (14) gelangt;
e) Beendigung der Kreislaufspülung, wobei Reinigungsfluid ausgeleitet wird und eine Ventileinrichtung (42) der zweiten Zone (14) schliesst, wenn der Füllstand an Reinigungsfluid in der zweiten Zone (14) unter ein bestimmtes Level gesunken ist; und
f) Endspülung des Milchsystems mit Reinigungsfluid aus der ersten Zone (12).

2. Verfahren nach Anspruch 1, **dadurch gekennzeichnet, dass** in Schritt a) Frischwasser als Reinigungsfluid in die erste Zone (12) und zweite Zone (14) gefüllt ist.

3. Verfahren nach Anspruch 1 oder 2, **dadurch gekennzeichnet, dass** Schritt c) von einer Steuereinheit gestartet wird, wenn eine korrekte Position des Reinigungsmoduls von einem Sensor an die Steuereinheit übermittelt wird.

4. Verfahren nach Anspruch 1 oder 3, **dadurch gekennzeichnet, dass** das Reinigungsverfahren Erfassung eines Leitwertes des Reinigungsfluid umfasst, wobei die erfassten Daten der Steuereinheit übermittelt werden.

5. Verfahren nach einem der Ansprüche 1 bis 4, **dadurch gekennzeichnet, dass** die Umschaltung auf den nachfolgenden Schritt in Abhängigkeit zu dem erfassten Leitwert erfolgt.

6. Reinigungsmodul (10) für ein Milchsystem mit einer Abgabeeinrichtung ausgebildet als Mittel für das Verfahren gemäss den Ansprüchen 1 bis 5, zugeordnet einem Getränkebereiter, wobei das Reinigungsmodul (10) zur Aufnahme von Reinigungsfluid mindestens zwei Zonen (12, 14) aufweist und in der zweiten Zone (14) eine Kammer (24) ausgebildet ist, welche mit dieser mittels einer fluidleitenden Verbindung (26) verbunden und in welche ein Reinigungsmittel einfüllbar ist, wobei die mindestens zwei Zonen (12, 14) derart fluidleitend mit dem Milchsystem verbindbar sind, dass Reinigungsfluid aus mindestens der ersten Zone (12) und der zweiten Zone (14) entnehmbar, durch das Milchsystem förderbar und in die Kammer (24) zumindest zum Teil rückführbar ist.

7. Reinigungsmodul (10) nach Anspruch 6, **dadurch gekennzeichnet, dass** das Reinigungsmodul (10) gegen einen Milchbehälter des Milchsystems austauschbar und mit Andockstationen (18, 18') des Milchsystems fluidleitend verbindbar ist.

8. Reinigungsmodul (10) nach Anspruch 6 oder 7, **dadurch gekennzeichnet, dass** mindestens in die erste Zone (12) und in die zweite Zone (14) des Reinigungsbehälters (10) als Reinigungsfluid Frischwasser einfüllbar ist.

9. Reinigungsmodul (10) nach einem der Ansprüche 6 bis 8, **dadurch gekennzeichnet, dass** in fluidleitenden Verbindungen (34, 32, 32') zu der ersten Zone (12) mindestens eine Ventileinrichtung (36) angeordnet ist.

10. Reinigungsmodul (10) nach einem der Ansprüche 6 bis 9, **dadurch gekennzeichnet, dass** in fluidleitenden Verbindungen (32, 32', 40) zu der zweiten Zone (14) mindestens eine Ventileinrichtung (42) angeordnet ist, welche schliesst, wenn ein Füllstand an Reinigungsfluid in der zweiten Zone (14) unter ein Level gefallen ist.

11. Reinigungsmodul (10) nach einem der Ansprüche 6 bis 10, **dadurch gekennzeichnet, dass** in die Kammer (24) Reinigungsfluid über eine Rückführleitung (44) einströmt und aus der Kammer (24) über die fluidleitende Verbindung (26) in die zweite Zone (14) ausströmt.

12. Reinigungsmodul (10) nach einem der Ansprüche 6 bis 11, **dadurch gekennzeichnet, dass** das Reinigungsfluid an der Abgabeeinrichtung des Milchsystems über einen mit dieser verbindbaren Reinigungskopf und einer Rückführleitung in die Kammer (24) rückführbar ist.

13. Reinigungsmodul (10) nach einem der Ansprüche 6 bis 12, **dadurch gekennzeichnet, dass** Reinigungsfluid in eine Tropfschale des Getränkebereiters ausleitbar ist.

14. Reinigungsmodul (10) nach einem der Ansprüche 6 bis 12, **dadurch gekennzeichnet, dass** Reinigungsfluid in eine dritte Zone (20) rückführbar ist, welche in dem Reinigungsmodul (10) umfasst ist.

15. Reinigungsmodul (10) nach Anspruch 14, **dadurch gekennzeichnet, dass** die dritte Zone als ein abtrennbarer Behälter (20) ausgebildet ist.

## Claims

1. Method of cleaning of a milk system with dispensing device, which milk system is associated with a beverage maker, comprising a control unit and a cleaning module (10), having the steps:
a) replacing a milk container of the milk system by the cleaning module (10), comprising at least two zones (12, 14), cleaning fluid being filled in a first zone (12) and in a second zone (14), and a cleaning agent being filled in a chamber (24);
b) connecting the first zone (12) and the second zone (14) with docking units (18, 18') of the milk system for suctioning cleaning fluid, conveying the cleaning fluid through the milk system and at least partial recirculation of the cleaning fluid in the cleaning module (10);
c) rinsing of the milk system with cleaning fluid, cleaning fluid being conveyed through the milk system out of the first zone (12) and/or out of the second zone (14) of the cleaning module (10) and being led out;
d) rinsing of the circuit of the milk system, cleaning fluid being extracted from the second zone (14), being heated by means of a heating device and being led back into the chamber (24), whereby it reaches the second zone (14) via a fluid-conductive connection (26);
e) terminating the circuit rinsing, cleaning fluid being led out and a valve device (42) of the second zone (14) being closed when the filling level of cleaning fluid in the second zone (14) drops below a determined level; and
f) final rinsing of the milk system with cleaning fluid from the first zone (12).

2. Method according to claim 1, **characterized in that** in step a) fresh water as cleaning fluid is filled in the first zone (12) and second zone (14).

3. Method according to claim 1 or 2, **characterized in that** step c) is started by a control unit when a correct position of the cleaning module is transmitted by a sensor to the control unit.

4. Method according to claim 1 or 3, **characterized in that** the cleaning method comprises measuring the conductance of the cleaning fluid, the captured data being transmitted to the control unit.

5. Method according to one of the claims 1 to 4, **characterized in that** the switchover to the subsequent step takes place according to the measured conductance.

6. Cleaning module (10) for a milk system with a dispensing device designed as means for the method according to claims 1 to 5, associated with a beverage maker, the cleaning module (10) having at least two zones (12, 14) for receiving cleaning fluid, and in the second zone (14) a chamber (24) is formed, which chamber is connected therewith by means of a fluid-conductive connection (26) and in which a cleaning fluid is fillable, the at least two zones (12, 14) being connectible to the milk system in a fluid-conductive way such that cleaning fluid is able to be withdrawn from at least the first zone (12) and the second zone (14), is able to be conveyed through the milk system and is able to be led back into the chamber (24) at least partially.

7. Cleaning module (10) according to claim 6, **characterized in that** the cleaning module (10) is exchangeable with a milk container of the milk system and is connectible in a fluid-conductive way with docking units (18, 18') of the milk system.

8. Cleaning module (10) according to claim 6 or 7, **characterized in that** fresh water as cleaning fluid is fillable at least into the first zone (12) and into the second zone (14) of the cleaning container (10).

9. Cleaning module (10) according to one of the claims 6 to 8, **characterized in that** disposed in the fluid-conductive connections (34, 32, 32') to the first zone (12) is at least one valve device (36).

10. Cleaning module (10) according to one of the claims 6 to 9, **characterized in that** disposed in the fluid-conductive connections (32, 32', 40) to the second zone (14) is at least one valve device (42), which closes when a filling level of cleaning fluid in the second zone (14) has fallen under a level.

11. Cleaning module (10) according to one of the claims 6 to 10, **characterized in that** cleaning fluid flows into the chamber (24) via a recirculation line (44) and out of the chamber (24) via the fluid-conveying connection (26) into the second zone (14).

12. Cleaning module (10) according to one of the claims 6 to 11, **characterized in that** at the dispensing device of the milk system, via a cleaning head connectible thereto and a recirculation line, the cleaning fluid is able to be led back into the chamber (24).

13. Cleaning module (10) according to one of the claims 6 to 12, **characterized in that** cleaning fluid is able to be led out into a drip tray of the beverage maker.

14. Cleaning module (10) according to one of the claims 6 to 12, **characterized in that** cleaning fluid is able to be led back into a third zone (20), which is included in the cleaning module (10).

15. Cleaning module (10) according to claim 14, **characterized in that** the third zone is designed as separable container (20).

## Revendications

1. Méthode de nettoyage d'un système laitier pourvu d'un dispositif de distribution, lequel système laitier est associé à un appareil de préparation de boisson, comprenant une unité de contrôle et un module de nettoyage (10), comprenant les étapes de:
a) remplacement d'un récipient laitier du système laitier par le module de nettoyage (10), comprenant au moins deux zones (12, 14), le fluide de nettoyage étant rempli dans la première zone (12) et dans la deuxième zone (14), et un agent nettoyant étant rempli dans un réservoir (24);
b) raccordement de la première zone (12) à la deuxième zone (14) par l'intermédiaire de stations d'accueil (18, 18') du système laitier pour aspirer le fluide de nettoyage, et transmission du fluide nettoyant à travers le système laitier, avec un retour au moins partiel du fluide nettoyant dans le module de nettoyage (10);
c) rinçage du système laitier à l'aide de fluide nettoyant, le fluide nettoyant étant mis en circulation et extrait par le système laitier depuis la première zone (12) et/ou de la deuxième zone (14) du module de nettoyage (10);
d) rinçage du système laitier en circuit fermé, du fluide nettoyant étant extrait de la deuxième zone (14) étant chauffé au moyen d'un dispositif chauffant et étant redirigé vers le réservoir (24), où il atteint la deuxième zone (14) via une conduite de transport de fluide (26);
e) arrêt du rinçage en circuit fermé, le fluide nettoyant étant évacué et un dispositif de valve (42) de la deuxième zone (14) étant fermé lorsque le niveau de remplissage du fluide nettoyant dans la deuxième zone (14) s'abaisse en-dessous d'un niveau déterminé; et
f) rinçage final du système laitier avec le fluide nettoyant depuis la première zone (12).

2. Méthode selon la revendication 1, **caractérisée en ce que** dans l'étape a) de l'eau fraîche est remplie dans la première zone (12) et la deuxième zone (14) en tant que fluide nettoyant.

3. Méthode selon l'une des revendications 1 ou 2, **caractérisée en ce que** l'étape c) est démarrée par une unité de contrôle quand une position correcte du module de nettoyage est transmise par un capteur à l'unité de contrôle.

4. Méthode selon l'une des revendications 1 ou 3, **caractérisée en ce que** la méthode de nettoyage comprend la mesure de la conductance du fluide nettoyant, les données mesurées étant transmises à l'unité de contrôle.

5. Méthode selon l'une des revendications 1 à 4, **caractérisée en ce que** la commutation vers l'étape suivante se produit en fonction de la conductance mesurée.

6. Module de nettoyage (10) pour système laitier avec un dispositif de distribution conçu comme moyen pour la méthode selon les revendications 1 à 5, associé à un appareil de préparation de boisson, le module de nettoyage (10) présentant au moins deux zones (12, 14) pour la réception du fluide nettoyant, et un réservoir (24) étant formé dans la deuxième zone (14), lequel réservoir étant relié à cette dernière au moyen d'une conduite de transport de fluide (26), et dans lequel un fluide nettoyant peut être rempli, les au moins deux zones (12, 14) pouvant être reliées au système laitier de manière à transporter du fluide de telle sorte que le fluide nettoyant peut être approvisionné au moins depuis la première zone (12) et la deuxième zone (14), peut être mis en circulation à travers le système laitier, et peut être réacheminé au moins partiellement dans le réservoir (24).

7. Module de nettoyage (10) selon la revendication 6, **caractérisé en ce que** le module de nettoyage (10) peut être échangé avec un récipient laitier du système laitier, et peut être relié avec les stations d'accueil (18, 18') du système laitier de manière à transporter du fluide.

8. Module de nettoyage (10) selon l'une des revendications 6 ou 7, **caractérisé en ce que** de l'eau fraîche peut être remplie au moins dans la première zone (12) et dans la deuxième zone (14) du module de nettoyage (10) en tant que fluide nettoyant.

9. Module de nettoyage (10) selon l'une des revendications 6 à 8, **caractérisé en ce qu'**au moins un dispositif de valve (36) est disposé dans les conduites de transport de fluide (34, 32, 32') vers la première zone (12).

10. Module de nettoyage (10) selon l'une des revendications 6 à 9, **caractérisé en ce qu'**au moins un dispositif de valve (42) est disposé dans les conduites de transport de fluide (32, 32', 40) vers la deuxième zone (14), laquelle se ferme lorsqu'un niveau de remplissage de fluide nettoyant dans la deuxième zone (14) est tombé sous un niveau.

11. Module de nettoyage (10) selon l'une des revendications 6 à 10, **caractérisé en ce que** le fluide nettoyant s'écoule dans le réservoir (24) via une conduite de retour (44) et hors du réservoir (24) via la conduite de transport de fluide (26) acheminant vers la deuxième zone (14).

12. Module de nettoyage (10) selon l'une des revendications 6 à 11, **caractérisé en ce que** le fluide nettoyant peut être réacheminé depuis le dispositif de distribution du système laitier vers le réservoir (24) via une tête de nettoyage pouvant être connectée au système de distribution et une conduite de retour.

13. Module de nettoyage (10) selon l'une des revendications 6 à 12, **caractérisé en ce que** le fluide nettoyant peut être évacué vers un bac d'égouttage de l'appareil de préparation de boisson.

14. Module de nettoyage (10) selon l'une des revendications 6 à 12, **caractérisé en ce que** le fluide nettoyant peut être réacheminé vers une troisième zone (20), qui est contenue dans le module de nettoyage (10).

15. Module de nettoyage (10) selon la revendication 14, **caractérisé en ce que** la troisième zone est conçue comme un récipient détachable (20).
